Europäisches Patentamt

European Patent Office

Office européen des brevets

(11) Publication number: **0 060 076**
**A1**

(12) **EUROPEAN PATENT APPLICATION**

(21) Application number: **82301059.0**

(22) Date of filing: **02.03.82**

(51) Int. Cl.³: **A 47 L 13/16**
**B 32 B 5/24**

(30) Priority: **02.03.81 ZA 811355**

(43) Date of publication of application:
**15.09.82 Bulletin 82/37**

(84) Designated Contracting States:
**AT BE CH DE FR GB IT LI LU NL SE**

(71) Applicant: **Rogut, Alan Edmund**
**504 Bowenvale Beach Road Mouille Point**
**Cape Town Cape Province(ZA)**

(71) Applicant: **Rogut, Raoul Jon**
**504 Bowenvale Beach Road Mouille Point**
**Cape Town Cape Province(ZA)**

(72) Inventor: **Rogut, Alan Edmund**
**504 Bowenvale Beach Road Mouille Point**
**Cape Town Cape Province(ZA)**

(72) Inventor: **Rogut, Raoul Jon**
**504 Bowenvale Beach Road Mouille Point**
**Cape Town Cape Province(ZA)**

(74) Representative: **Brock, Peter William et al,**
**Michael Burnside & Partners 2 Serjeants' Inn Fleet**
**Street**
**London EC4Y 1HL(GB)**

(54) **Cleaning cloth.**

(57) A cleaning cloth which comprises a layer (12) of foamed synthetic plastics material united with a piece (14) of woven or knitted fabric. The foamed synthetic plastics material can be sandwiched between two layers of fabric.

Fig. 1

EP 0 060 076 A1

Croydon Printing Company Ltd.

COMPLETE DOCUMENT

THIS INVENTION relates to cleaning cloths.

According to one aspect of the present invention there is provided a cleaning cloth comprising a piece of fabric and a sheet of foamed synthetic plastic material, said sheet of foamed synthetic plastics material and said piece of fabric being co-extensive, or substantially co-extensive, in both area and size and being secured to one another so that said sheet of foamed synthetic plastics material forms a backing for said piece of fabric.

Said piece of fabric and said sheet of foamed synthetic plastics material can be secured together around their commonn periphery by so-called blanket stitching thereby to inhibit fraying. Additionally, the sheet of foamed synthetic plastics material and said piece of fabric can be united over their entire areas by the application of heat and pressure.

Said fabric can be knitted or woven and the nature of the material used as the fabric can be determined in dependence on the intended use of the cleaning cloth. For example, a strong knitted fabric can be used where the cloth is intended for drying dishes and household surfaces. As a further example, a soft woven fabric is suitable if the cloth is to be used for personal cleaning purposes ie a face cloth for a baby.

If desired the cloth can comprise a further piece of fabric with the sheet of foamed synthetic plastics material sandwiched between the two pieces of fabric.

The foamed synthetic plastics material can be of any suitable type ie polyurethane or polystyrene.

The cloth can include a loop of material to enable it to be hung.

According to a further aspect of the present invention there is provided a method of making a cleaning cloth comprising superposing a piece of fabric and a sheet of foamed synthetic plastics material, heating the superposed piece of fabric and sheet of foamed synthetic plastics material, and pressing the sheet of foamed synthetic plastics material and the piece of fabric together to unite the sheet and the fabric over substantially their entire areas.

If the fabric and sheet which are united are of a larger area than the desired area of the cleaning cloth, then the method can include the further step of cutting the larger piece of composite material into smaller pieces.

The method can include the further step of stitching the edges of the united sheet and fabric to inhibit fraying.

The sheet of foamed synthetic plastics material can be sandwiched between two pieces of fabric and united with both the pieces of fabric.

According to another aspect of the present invention there is provided a method of making a cleaning cloth comprising superposing a piece of fabric and a sheet of foamed synthetic plastics material, and sewing the piece of fabric and the sheet of foamed synthetic plastics material to one another.

For a better understanding of the present invention and to show how the same may be carried into effect, reference will now be made, by way of example, to the accompanying drawing in which:-

Figure 1 is a pictorial view, partly broken away, of a cleaning cloth according to the present invention,

Figure 2 is a section on the line II-II of Figure 1, and

Figure 3 is a fragmentary cross section of a

modified form.

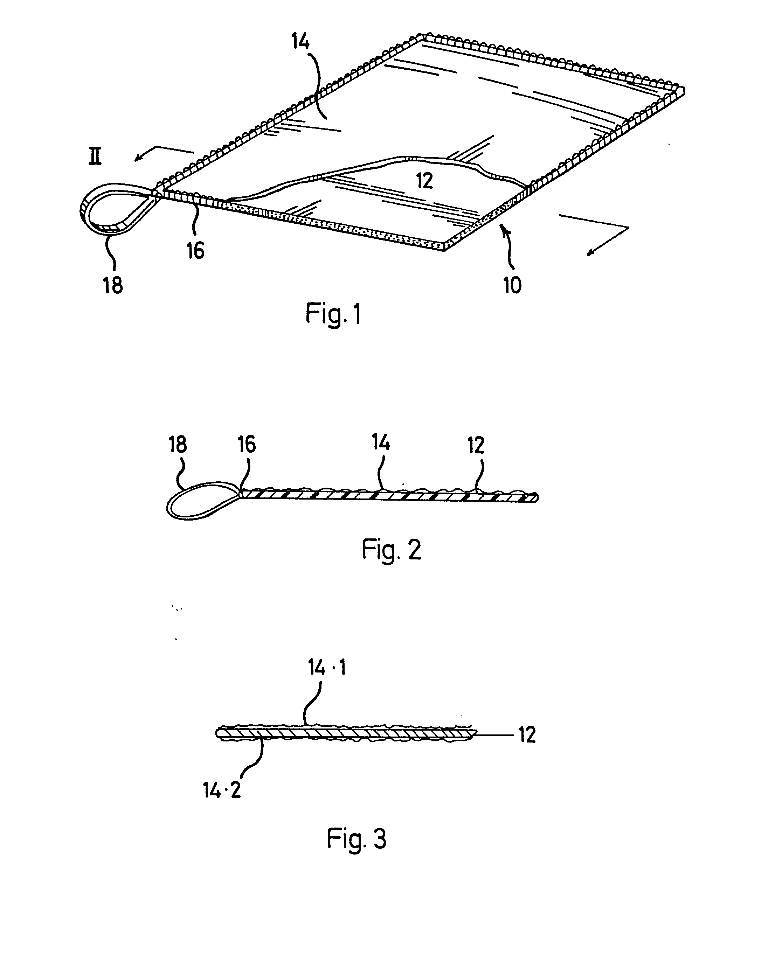

The cleaning cloth 10 illustrated in Figures 1 and 2 comprises a sheet 12 of foamed synthetic plastics material and a piece of knitted or woven fabric 14, the sheet 12 and piece of fabric 14 being co-extensive insofar as their shapes and areas are concerned. Around their peripheries the sheet 12 and piece of fabric 14 are stitched, as shown at 16, to inhibit fraying and a material loop 18 is sewn on to enable the cloth to be hung.

During manufacture, the sheet 12 and the piece of fabric 14 are pressed together with the application of heat so that the two are united over their whole areas. The individual threads of the piece of woven or knitted fabric 14 are thus adhered, as shown in Figure 2, to the sheet 12.

Referring now to figure 3, this shows a modified form of the invention in which sheet 12 is sandwiched between to pieces 14.1 and 14.2 of knitted or woven fabric.

Instead of simply stitching the edge of the cloth, it can be bound using a ribbon-like piece of material.

WE CLAIM :-

1.      A cleaning cloth comprising a piece of fabric and a sheet of foamed synthetic plastic material, said sheet of foamed synthetic plastics material and said piece of fabric being co-extensive, or substantially co-extensive, in both area and size and being secured to one another so that said sheet of foamed synthetic plastics material forms a backing for said piece of fabric.

2.      A cleaning cloth according to claim 1, in which said piece of fabric and said sheet of foamed synthetic plastics material are secured together around their commonn periphery by blanket stitching.

3.      A cleaning cloth according to claim 1 or 2, in which the sheet of foamed synthetic plastics material and the piece of fabric are united over their entire areas by the application of heat and pressure.

4.      A cleaning cloth according to claim 1 or 2 and comprising a further piece of fabric with the sheet of foamed synthetic plastics material sandwiched between the two pieces of fabric.

5.      A cleaning cloth according to claim 1 or 2 in which the foamed synthetic plastics material is polyurethane or polystyrene.

6.      A method of making a cleaning cloth comprising superposing a piece of fabric and a sheet of foamed synthetic plastics material, heating the superposed piece of fabric and sheet of foamed synthetic plastics material, and pressing the sheet of foamed synthetic plastics material and the piece of fabric together to unite the sheet and the fabric over substantially their entire areas.

7.      The method according to claim 6, in which the fabric and sheet which are united are of a larger area than the desired area of the cleaning cloth, the method further including the step of cutting the larger piece of composite material into smaller pieces.

8.      The method according to claim 6 or 7 and including the further step of stitching the edges of the united sheet and fabric to inhibit fraying.

9.      The method according to claim 6 or 7, in which said sheet of foamed synthetic plastics material is sandwiched between two pieces of fabric and united with both said pieces of fabric.

10.     A method of making a cleaning cloth comprising superposing a piece of fabric and a sheet of foamed synthetic plastics material, and sewing the piece of fabric and the sheet of foamed synthetic plastics material to one another.

11.     A method according to claim 10, in which the piece of fabric and the sheet of foamed synthetic plastics material are sewn together around their peripheries by blanket stitching.

1 / 1

Fig. 1

Fig. 2

Fig. 3

# EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR - A - 2 196 142 (JOHNSON & JOHNSON)<br><br>* page 2, lines 7-40; figures 1,2 * | 1,3,5, 9 | A 47 L 13/16<br>B 32 B 5/24 |
| X | FR - A - 2 133 632 (COLGATE-PALMO-LIVE COMP.)<br><br>* page 2, lines 18-40; page 3, lines 3-8; figures 1-5 * | 1,4 | |
| X | US - A - 3 040 353 (GRAY, H.Z.)<br><br>* column 2, lines 8-60; figures 1-4 * | 1,2,5, 8,11 | |
| A | FR - A - 2 383 644 (HOECHST AG)<br><br>* page 1, lines 21-24; figure * | 7 | **TECHNICAL FIELDS SEARCHED (Int. Cl. ³)**<br><br>A 47 L<br>B 32 B |
| A | US - A - 3 169 264 (WALKER, W.L.) | | |
| P,A | GB - A- 2 063 058 (GROPPER G.) | | |

The present search report has been drawn up for all claims

| Place of search | Date of completion of the search | Examiner |
|---|---|---|
| The Hague | 10-06-1982 | MUNZER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82